# EUROPÄISCHE PATENTSCHRIFT

(11) **EP 2 547 194 B1**
(45) Veröffentlichungstag und Bekanntmachung des Hinweises auf die Patenterteilung: **28.01.2015**
(21) Anmeldenummer: 11722287.7
(22) Anmeldetag: 18.03.2011
(51) Int. Cl.: A01D 41/00, A01D 43/063, A01F 12/40, A01F 25/18

(54) **VERFAHREN UND EINRICHTUNG ZUM ERNTEN VON DRUSCHFRÜCHTEN**
METHOD AND DEVICE FOR HARVESTING THRESHED CROPS
PROCÉDÉ ET DISPOSITIF POUR LA RÉCOLTE DE PRODUITS À BATTRE

(30) Priorität: 19.03.2010 DE 102010012049
(43) Veröffentlichungstag der Anmeldung: 23.01.2013
(73) Patentinhaber: RUMPLER, Johann, 06849 Dessau (DE)
(72) Erfinder: RUMPLER, Johann, 06849 Dessau (DE)
(74) Vertreter: Fischer, Volker
(86) Internationale Anmeldenummer: PCT/DE2011/000281
(87) Internationale Veröffentlichungsnummer: WO 2011/113426

(56) Entgegenhaltungen:
- EP-A2- 1 902 611
- WO-A2-2006/074667
- CA-C- 2 180 691

## Beschreibung

Die Erfindung betrifft ein Verfahren zum Ernten von Druschfrüchten gemäß dem Oberbegriff des Anspruchs 1. Ferner umfasst die Erfindung eine Einrichtung zum Ernten von Druschfrüchten.

Im Sinne der Erfindung sind unter Ernte all diejenigen Verfahrensschritte zu verstehen, welche zum Einbringen landwirtschaftlicher Gewächse und Früchte notwendig sind. Die Druschfrüchte, und hierbei sind insbesondere Körnerfrüchte in Gestalt von Getreide zu nennen, bestehen im Wesentlichen aus dem Korn, der Spreu und dem Stroh.

Während das Stroh und die Körner ihrer bekannten Nutzung zugeführt werden, hat die Bergung von Spreu als stofflicher Bestandteil der Getreidepflanze in Europa an Bedeutung verloren. Bis einschließlich zur Nutzung stationärer maschineller Dreschmaschinen fiel Spreu durch die Ernte der ganzen Pflanze mit an und konnte getrennt erfasst und genutzt werden. Bei der Verlagerung des Dreschvorgangs vom Hof auf das Feld durch mobile Mähdrescher war dies anfänglich bei geringen Fahrgeschwindigkeiten und kleinen Schneidwerksbreiten durch Spreusäcke und später am Mähdrescher angehängte Wechselspreuwagen noch beherrschbar. Mit Einführung der Mähdrescher, insbesondere ab Mitte der 1960er Jahre, führte der äußerst großvolumige Spreuanfall zum Verzicht auf Bergung, da die Übergabe auf parallel fahrende großvolumige Anhänger nicht effizient war. Derzeit besteht das Problem, dass moderne Mähdrescher die Spreu nur unter zusätzlichem energetischem Aufwand gleichmäßig über die Schnittbreite verteilen können.

Aus der DE 35 44157 C1 ist hierzu eine Vorrichtung für Mähdrescher zum Verteilen der Spreu vorbekannt. Die Vorrichtung besteht aus rotierenden Blättern und aus einem mit einem hinteren Abdeckblech versehenen Tragrahmen, in dem zwei gegenläufig angetriebene Rotoren mit zumindest zwei schaufelartigen Blättern nebeneinander um zueinander parallele Achsen drehbar gelagert sind, wobei der Rahmen auf zwei Trägern verschiebbar geführt und feststellbar ist. Kennzeichnend für diese Erfindung ist, dass die Träger an einem Ende an Schlitten schwenkbar gelagert sind, die in mit dem Mähdrescher verbundenen Schienen verstellbar geführt sind, und dass die anderen Enden der Träger in unterschiedlichen Schwenklagen fixiert werden können.

Die DE 28 37 814 A1 offenbart einen Mähdrescher zum Mähen von Getreide am vorderen Ende des Mähdreschers, Dreschen des gemähten Getreides und Abführen des Strohs und der Spreu von einem Strohschüttler bzw. einem Streusieb am hinteren Ende des Mähdreschers. Kennzeichnend für diese Erfindung ist, dass zur Aufnahme des Strohs und der Spreu ein Sammeltrichter vorgesehen ist, an dessen Ausgangsende ein Förderband verschwenkbar angeordnet ist, der das Stroh und die Spreu in einer gewissen Entfernung vom Sammeltrichter abgibt.

Die US 7,651,391 B2 beschreibt ein Verfahren sowie eine Vorrichtung zum unmittelbaren Bergen von beim Felddrusch anfallender Biomasse.

Des Weiteren ist von der Firma Thierart, 08300 Le Chätelet-sur-Retourne, Frankreich ein am Mähdrescherheck angeordneter Aufbaubunker zur Spreuaufnahme bekannt. Der aus Gründen des geringen Gewichts aus Planenstoff bestehende Bunker erreicht ein Volumen von bis zu 16 m³. Wegen der auch hier für Korn und Spreu unterschiedlich erforderlichen Übergabe und Transportlösungen wird die erreichbare Durchsatzleistung des auf die Kornernte fixierten Mähdreschwerks allerdings gebremst. Diese Lösung eignet sich bei lokal akutem Bedarf für Futterspreu in begrenzten Transportmengen und auch bei kleineren Feldflächen mit geringerem Zeitdruck in der Erntetechnologie.

Eine in der CA 2,180,691 A beschriebene weitere Lösung ist die gemeinsame Erfassung von Korn und Spreu in einem Mähdrescherbunker ohne Reinigungseinrichtung. Diese Lösung ist für hohe Ertragsbedingungen nicht geeignet. Es entstehen Zusatzkosten für den Transport, ohne auf die außerdem erforderliche Strohbergung verzichten zu können.

Den aus dem Stand der Technik vorbekannten Lösungen haftet der Nachteil an, dass diese für die Bergung des reinen Spreuanfalls im größeren Maßstab wirtschaftlichen Aspekte nicht oder zumindest nur unzureichend genügen.

Es besteht jedoch seit geraumer Zeit das Bedürfnis, die einen hohen Energieinhalt aufweisende Spreu - ergänzend zum Stroh und den Körnern - als Biomasse nutzen zu können. Der gegenüber den Körnern etwa 50 % geringere Stickstoffgehalt der Spreu führt bei Verbrennungen zu einem geringeren Stickstoffausstoß. Darüber hinaus weist die Spreu gegenüber dem Stroh einen geringeren Kalium- und Chlorgehalt auf, was zu geringeren Staubemissionen und zu geringeren Verschlackungen der Asche führt. Nicht unerwähnt soll in diesem Zusammenhang bleiben, dass sich die Spreu auf Grund der hohen Saugfähigkeit sowohl als Einstreu als auch und wegen des guten Futterwertes als Futterbeigabe eignet.

Die Aufgabe der Erfindung besteht nunmehr darin, ein Verfahren zum Ernten von Druschfrüchten vorzuschlagen, welches die effiziente Bergung der energiehaltigen Spreu zum Zwecke der Weiternutzung unter Berücksichtigung einer nachhaltigen Bewirtschaftung der Agrarflächen ermöglicht. Eine weitere Aufgabe der Erfindung besteht darin, eine diesbezügliche Einrichtung zur Bergung der Spreu auszubilden.

Nach der Konzeption der Erfindung umfasst das Verfahren zum Ernten von Druschfrüchten die Verfahrensschritte Mähen und Aufnehmen der Druschfrüchte, Ausdreschen und Abscheiden der Körner und der Spreu vom Stroh und das Zuführen der Körner und der Spreu in einen Bunker. Als Bunker kann sowohl der Bunker eines Mähdreschers als auch der Bunker eines Anhängers des Mähdreschers vorgesehen sein. Erfindungsgemäß sind die Verfahrensschritte Häckseln des Strohs und Separierung in eine erste und eine zweite Strohfraktion, Ablage der ersten Strohfraktion auf dem Feld, Zerkleinerung der zweiten Strohfraktion und Übergabe in den Bunker sowie Übergabe des Gemisches aus Körnern, Spreu und zweiter Strohfraktion in ein Transportfahrzeug vorgesehen. Optional kann sich nach dem Ausdreschen und Abscheiden der Körner und der Spreu vom Stroh ein Reinigungsschritt anschließen.

Vorzugsweise beträgt der Anteil der auf dem Feld verbleibenden ersten Strohfraktion zwischen 70 % bis 95 %, besonders bevorzugt 75 %, und der Anteil der in den Bunker des Mähdreschers eingebrachten zweiten Strohfraktion zwischen 5 % bis 30 %, besonders bevorzugt 25 %, von der Gesamtstrohfraktion. Die erste Strohfraktion wird dabei gleichmäßig über die Breite des Schneidwerks auf das Feld ausgeworfen. Die nicht auf dem Feld verbleibende zweite Strohfraktion entspricht derjenigen Strohmenge, auf die jährlich ohne Störung der ausgeglichenen Humusbilanz für den Ackerboden verzichtet werden kann. Der besagte Anteil der ersten Strohfraktion zwischen 70 % bis 95 %, besonders bevorzugt 75 %, der Gesamtstrohfraktion ist jedoch nicht statisch, sondern kann in Abhängigkeit der gewünschten Nutzung des Gemisches aus Körnern, Spreu und zweiter Strohfraktion entsprechend variabel über eine Häckseleinrichtung eingestellt werden.

Es bestehen die beiden Möglichkeiten, einerseits das Gemisch im Bunker aus Körnern, Spreu und zweiter Strohfraktion in einer Aufbereitungsanlage zu separieren, wobei Körner und Spreu sowie die zweite Strohfraktion getrennt gesammelt und weiterverarbeitet werden. Andererseits kann das Gemisch aus Körnern, Spreu und zweiter Strohfraktion in einem nicht separierten Zustand als Gemisch weiteren Verfahrensschritten zugeführt werden.
Das Gemisch aus Körnern, Spreu und zweiter Strohfraktion kann temporär in einer Feldmiete abgelegt werden. Es kann dann je nach Bedarf zu einem späteren Zeitpunkt einer Weiterverarbeitung zugeführt werden.

Es hat sich als besonders vorteilhaft erwiesen, wenn das Bunkergemisch aus Körnern, Spreu und zweiter Strohfraktion im Bunker mittels einer Verdichtungsvorrichtung verdichtet wird. Mit dieser Maßnahme geht einher, dass der Bunker des Mähdreschers eine größere Menge an Gemisch aufnehmen und das Verfahren zum Ernten der Druschfrüchte effizienter gestaltet werden kann. Bei einer Ablagerung des Gemisches am Feldrand in einer Miete werden nur geringe Anforderungen an dessen Abdeckung gestellt. Das im Gemisch enthaltende Stroh als zweite Strohfraktion und die Spreu wirken als ausreichend guter Überhitzungs-, Kälte- und Nässeschutz.

Erfindungsgemäß umfasst die Einrichtung zum Ernten von Druschfrüchten unter Verwendung eines Mähdreschers ein dem Schneidwerk des Mähdreschers nachgeordnetes Dreschwerk zum Trennen eines Körner-Spreu-Gemisches vom Stroh, eine dem Dreschwerk nachgeordnete Häckseleinrichtung mit daran angeschlossener Separiereinrichtung zur Separierung der gesamten Strohfraktion in eine erste und eine zweite Strohfraktion, eine der Separierung nachgeordnete Zerkleinerungseinrichtung zur Zerkleinerung der zweiten Strohfraktion sowie ein Gebläse zum Fördern des Gemisches aus Körnern, Spreu und zweiter Strohfraktion in den Bunker. Die zweite Strohfraktion wird in dieser Zerkleinerungseinrichtung in Strohstücke mit einer Größe zwischen 0,5 cm bis 2 cm zerkleinert. Durch diesen Größenbereich der Strohstücke wird sichergestellt, dass einerseits der Bunker bezüglich seines Ladevolumens optimal genutzt wird, weil das Gemisch aus Körnern, Spreu und zweiter Strohfraktion bei dieser Größe der Strohstücke besonders effizient und effektiv verdichtet werden kann, und andererseits, dass das beispielsweise in einer Miete abgelegte Gemisch aus Körnern, Spreu und zweiter Strohfraktion ausreichend gegen Überhitzung, Kälte und Nässe geschützt ist.
Es hat sich in diesem Zusammenhang als besonders vorteilhaft erwiesen, die Zerkleinerungseinrichtung als Hammermühle auszubilden.

Bei einer weiteren bevorzugten Ausgestaltung der Erfindung weisen die Zerkleinerungseinrichtung und das Gebläse eine gemeinsame Antriebswelle auf. Die dadurch sich ausbildende kompakte Bauweise erfordert nur einen kleinen Bauraum und damit nur kurze Zuführstrecken für die zweite Strohfraktion und das Körner-Spreu-Gemisch. Diese konstruktive Lösung ist selbst dann mit nur vier Hauptwellen, acht großen Wellenlagern und drei hydraulischen Antrieben realisierbar, wenn das Dreschsystem aus zwei Rotoren besteht.

Erfindungsgemäß umfasst der Bunker eine verschiebbare Schubwand, mittels welcher das Gemisch aus Körnern, Spreu und zweiter Strohfraktion verdichtet werden kann. Ergänzend dazu kann eine innerhalb oder außerhalb des Bunkers platzierte Folienschlauchpresse vorgesehen werden, welche einer Portionierung und Ablage des Gemischs aus Körnern, Spreu und zweiter Strohfraktion in Folienschlauchabschnitten dient. Hierzu kann die hintere Bordwand des Bunkers als Folienschlauchpresse in Gestalt eines Schneckenrohrförderers ausgebildet sein. Der Schneckenrohrförderer umfasst dazu einen kurzen Rohrmantel, dessen beide Enden durch schräg gestellte Rollen und diesen zugeordnete Führungsbahnen zur Aufnahme der axialen Kräfte gelagert sind. Der Schneckenrohrförderer ist mit einem Rotationsantrieb bestückt, welcher einen von einem Hydraulikmotor angetriebenen, den Rohrmantel umschließenden Flachriemen aufweist, wobei die erforderliche axiale Anpresskraft durch die Schubwand erzeugt wird und die Rotation der Schneckenwendel das Gemisch aus Körnern, Spreu und zweiter Strohfraktion vorrangig zur Vermeidung innerer und äußerer Reibung und Brückenbildung bewegt. Die Steghöhe der mit der Innenseite des Rohrmantels verbundenen Schneckenwendel vergrößert sich dabei ausgehend vom Bunker und ist dabei derart ausgebildet, dass sie bei Stillstand des Rohrmantels praktisch die hintere Rückhaltewand des Bunkers bildet.

Die signifikanten Vorteile und Merkmale der Erfindung gegenüber dem Stand der Technik sind im Wesentlichen:
- ganzheitliches Mähdruschverfahren mit nur einer Feldüberfahrt zur Gewinnung von Körnern, Spreu und einer Strohfraktion, wobei nur die bezüglich einer gewünschten Humusbilanz vertretbare Strohmenge vom Feld entnommen wird und wobei nur eine Feldüberfahrt für den Transport des einzubringenden Gemisches aus Körnern, Spreu und zweiter Strohfraktion erfoderlich ist,
- Häckseln des Strohs und Separierung in eine erste und eine zweite Strohfraktion, wobei die erste Strohfraktion wieder ausgeworfen und auf dem Feld verteilt und die zweite Strohfraktion gemeinsam mit den Körnern und der Spreu als Gemisch im Bunker gesammelt wird,
- das Gemisch aus Körnern, Spreu und zweiter Strohfraktion kann am Feldrand zwischengelagert werden, ohne dass zusätzliche Maßnahmen zum Schutz gegen Überhitzung, Kälte und Nässe erforderlich sind, wodurch der Ernteablauf optimiert wird,

- das Gemisch aus Körnern, Spreu und zweiter Strohfraktion kann entweder in einer Aufbereitungsanlage separiert werden, wobei Körner und Spreu sowie die zweite Strohfraktion getrennt und weiterverarbeitet werden, oder als Gemisch aus Körnern, Spreu und zweiter Strohfraktion nachfolgenden Verfahrensschritten zugeführt werden,
- als nachfolgender Verfahrensschritt ist die Herstellung von Biomasseprodukten, wie beispielsweise Pellets, Biogas oder Futter, möglich,
- die Zerkleinerung der zweiten Strohfraktion auf dem Mähdrescher mittels einer vorzugsweise als Hammermühle ausgebildeten Zerkleinerungseinrichtung emöglicht eine effektive Nutzung der Ladekapazität des Bunkers und
- die hintere Bordwand des Bunkers kann optional als Folienschlauchpresse für eine Portionierung und Ablagerung des Gemisches aus Körnern, Spreu und zweiter Strohfraktion ausgebildet sein.

Die Ziele und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, von denen zeigen:
- Figur 1:: eine schematische Darstellung eines erfindungsgemäßen Mähdreschers,
- Figur 2:: eine schematische Darstellung eines Bunkers mit Folienschlauchpresse.

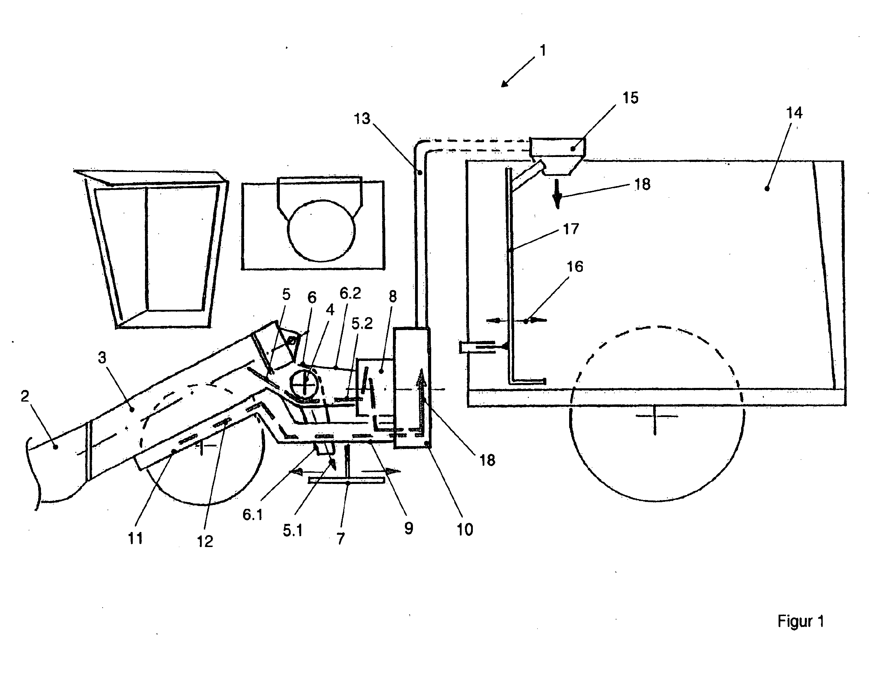

Figur 1 zeigt eine schematische Darstellung eines erfindungsgemäßen Mähdreschers 1. Der Mähdrescher 1 weist ein bis zum Schneidwerk 2 vorgelegtes, nach dem Axialflussprinzip arbeitendes Dreschwerk 3 auf. Dem Dreschwerk 3 folgt eine Häckseleinrichtung 4 mit einem zur Separierung der gehäckselten Gesamtstrohfraktion 5 in eine erste und eine zweite Strohfraktion 5.1, 5.2 ausgebildeten Gehäuse 6. Das Gehäuse 6 weist dazu einen Rohrabschnitt 6.1 zur Leitung der ersten Strohfraktion 5.1 zu einer Verteileinrichtung 7 für das Ablegen der ersten Strohfraktion 5.1 auf dem Feld und eine kurze Gleitbahn 6.2 zur Leitung der zweiten Strohfraktion zu einer als Hammermühle ausgebildeten Zerkleinerungseinrichtung 8 auf. Der Ausgang der Zerkleinerungseinrichtung 8 mündet im Saugrohr 9 eines Gebläses 10. Unterhalb des Dreschwerkes 3 ist eine Auffangvorrichtung 11 zum Auffangen des Körner-Spreu-Gemisches 12 angeordnet. Der Ausgang der Auffangvorrichtung 11 mündet ebenfalls im Saugrohr 9 des Gebläses 10. Vom Gebläse 10 führt eine Rohrleitung 13 zu einem oberhalb des Bunkers 14 angeordneten Zyklon 15. Innerhalb des Bunkers 14 ist eine in Richtung des Pfeiles 16 verschiebbare Schubwand 17 angeordnet, an deren oberen Ende der Zyklon 15 angebracht ist.
Das mittels der Schneidwerk 2 abgeschnittene Getreide wird im Dreschwerk 3 gedroschen und in eine Gesamtstrohfraktion 5 und ein Körner-Streu-Gemisch 12 getrennt. Die Gesmtstrohfraktion 5 wird einer Häckseleinrichtung 4 zugeführt, dort gehäckselt und in eine erste Strohfraktion 5.1 und eine zweite Strohfraktion 5.2 separiert. Dabei beträgt der Anteil der ersten Strohfraktion 5.1 zwischen 70 % bis 95 %, bevorzugt 75 %, und der Anteil der zweiten Strohfraktion 5.2 zwischen 5 % bis 30 %, bevorzugt 25 %, der Gesamtstrohfraktion 5. Die erste Strohfraktion 5.1 gelangt über den Rohrabschnitt 6.1 des Gehäuses 6 zur Verteileinrichtung 7 und wird auf dem Feld verteilt abgelegt. Die zweite Strohfraktion 5.2 wird über die kurze Gleitbahn 6.2 der Zerkleinerungseinrichtung 8 zugeleitet und hier in Stücke mit einer Größe zwischen 0,5 cm bis 2,0 cm zerkleinert. Sie gelangt anschließend zum Saugrohr 9 des Gebläses 10. Das Körner-Spreu-Gemisch 12 gelangt über die Auffangvorrichtung 11 ebenfalls zum Saugrohr 9 des Gebläses 10 und wird hier mit der zerkleinerten zweiten Strohfraktion 5.2 zu einem Gemisch 18 aus Körnern, Spreu und zweiter Strohfraktion vermischt. Das Gemisch 18 aus Körnern, Spreu und zweiter Strohfraktion wird mittels des Gebläses 10 durch die Rohrleitunmg 13 zum Zyklon 15 gefördert. Mittels des Zyklons 15 wird des Gemisch 18 aus Körnern, Spreu und zweiter Strohfraktion in den Bunker 14 eingebracht. Die Schubwand 17 kann zyklisch in Richtung des Pfeiles 16 hin-und herbewegt werden, wodurch eine Verdichtung des im Bunker 14 befindlichen Gemisches 18 aus Körnern, Spreu und zweiter Strohfraktion bewirkt wird. Es hat sich gezeigt, dass aufgrund der Zerkleinerung der zweiten Strohfraktion 5.2 in Stücke mit einer Größe zwischen 0,5 cm bis 2,0 cm eine sehr effektive und optimierte Verdichtung des Gemisches 18 aus Körnern, Spreu und zweiter Strohfraktion im Bunker 14 mit geringem Energieaufwand erreicht werden kann.
Unter der Annahme einer Gesamtstrohfraktion von 6 t/ha können anteilig etwa 1,5 t/ha Stroh als zweite Strohfraktion 5.2 sowie 1,5 t/ha Spreu geerntet und eingebracht werden.
Ausgehend von einem wie vorstehend beschrieben aufgebauten Mährescher 1 kann gegenüber einem herkömmlichen Mähdrescher gleicher Baugröße das Volumen des Bunkers 14 etwa verdreifacht werden. Damit kann erreicht werden, dass die Menge des mit dem erfindungsgemäßen Verfahren zu erntenden und einzubringenden Gemisches 18 aus Körnern, Spreu und zweiter Strohfraktion von einem ha Feldfläche vom Bunker 14 eines erfindungsgemäßen Mähdreschers 1 aufgenommen werden kann.

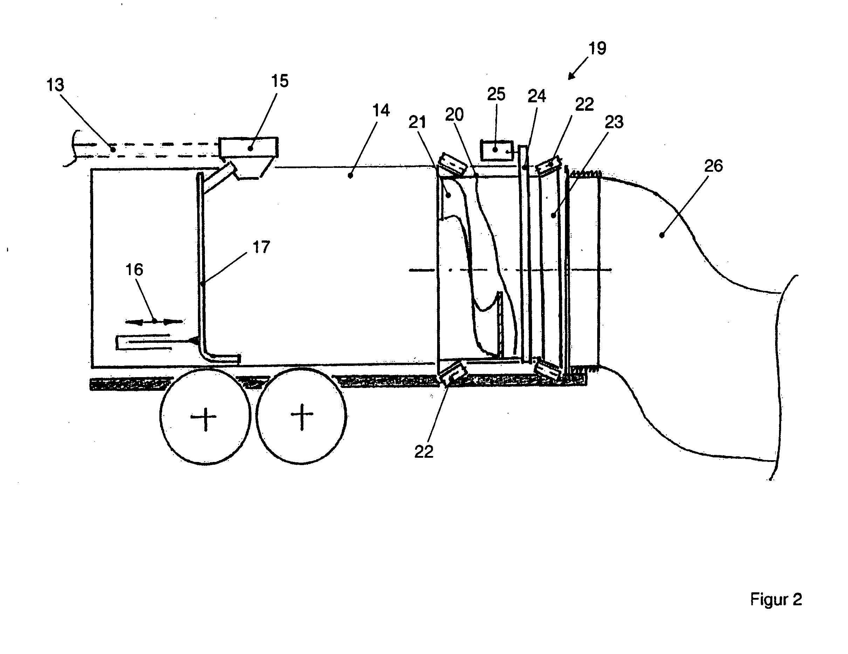

Figur 2 veranschaulicht schematisch die Anordnung einer Folienschlauchpresse 19 an der rückseitigen Wand des Bunkers 14. Die Folienschlauchpresse 19 ist als Schneckenrohrförderer ausgebildet. Sie weist einen drehbar angeordneten Rohrmantel 20 mit innenliegender Schneckenwendel 21 auf. Zur Lagerung des Rohrmantels 20 sind über seinen Umfang verteilt jeweils im Abstand von 180° gummierte Rollen 22, an denen der Rohrmantes 20 anliegt, angeordnet. Diese Rollen 22 nehmen durch eine geeignete Schrägstellung in konstruktiv einfachen Führungsbahnen 23 auch axiale Kräfte auf. Der Antrieb des Rohrmantels 20 erfolgt mittels eines den Umfang umschließenden Flachriemens 24 über einen als Hydraulikmotor ausgebildeten Motor 25. Dieser Motor ist im Wesentlichen nur für die Bewegung des Gemisches 18 zur Vermeidung von Brückenbildung ausgelegt. Das Einpressen des Gemisches 18 aus Körneren, Spreu und zweiter Strohfraktion in einen Folienschlauch 26 erfolgt durch eine Bewegung der Schubwand 17 in Richtung der Folienschlauchpresse 19. Der mit dem Gemisch 18 aus Körneren, Spreu und zweiter Strohfraktion gefüllte Folienschlauch wird auf dem Feld abgelegt.

### Liste der verwendeten Bezugszeichen

- 1: Mähdrescher
- 2: Schneidwerk
- 3: Dreschwerk
- 4: Häckseleinrichtung
- 5: Gesamtstrohfraktion
- 5.1: erste Strohfraktion
- 5.2: zweite Strohfraktion
- 6: Gehäuse
- 6.1: Rohrabschnitt
- 6.2: kurze Gleitbahn
- 7: Verteileinrichtung
- 8: Zerkleinerungseinrichtung, Hammermühle
- 9: Saugrohr
- 10: Gebläse
- 11: Auffangvorrichtung
- 12: Körner-Spreu-Gemisch
- 13: Rohrleitung
- 14: Bunker
- 15: Zyklon
- 16: Pfeil
- 17: Schubwand
- 18: Gemisch aus Körnern, Spreu und zweiter Strohfraktion
- 19: Folienschlauchpresse
- 20: Rohrmantel
- 21: Schneckenwendel
- 22: Rolle
- 23: Führungsbahn
- 24: Flachriemen
- 25: Motor
- 26: Folienschlauch

## Patentansprüche

1. Verfahren zum Ernten von Druschfrüchten mit den Verfahrensschritten:
a) Mähen und Aufnehmen der Druschfrüchte,
b) Ausdreschen und Trennen des Körner-Spreu-Gemisches (12) von der Gesamtstrohfraktion (5) und
c) Zuführen des Körner-Spreu-Gemisches (12) in einen Bunker (14),
**gekennzeichnet durch** die Verfahrensschritte:
d) Häckseln der Gesamtstrohfraktion (5) und Separierung in eine erste und eine zweite Strohfraktion (5.1,5.2),
e) Ablegen der ersten Strohfraktion (5.1) auf dem Feld,
f) Zerkleinerung der zweiten Strohfraktion (5.2),
g) Vermischen der zweiten Strohfraktion (5.2) und des Körner-Spreu-Gemisches (12) zu einem Gemisch (18) aus Körnern, Spreu und zweiter Strohfraktion und Eintragen des Gemisches (18) in einen Bunker (14) sowie
h) Übergabe des Gemisches (18) aus Körner, Spreu und zweiter Strohfraktion aus dem Bunker (14) in ein Transportfahrzeug oder Ablegen des Gemisches (18) aus Körnern, Spreu und zweiter Strohfraktion auf dem Feld.

2. Verfahren nach Anspruch 1,
**dadurch gekennzeichnet, dass**
der Anteil der auf dem Feld verbleibenden ersten Strohfraktion (5.1) zwischen 70 % bis 95 %, bevorzugt 75 %, und der Anteil der in den Bunker (14) eingetragenen zweiten Strohfraktion (5.2) zwischen 5 % bis 30 %, bevorzugt 25 %, der Gesamtstrohfraktion (5) beträgt.

3. Verfahren nach Anspruch 1 oder 2,
**dadurch gekennzeichnet, dass**
das Gemisch (18) aus Körnern, Spreu und zweiter Strohfraktion im Bunker (14) verdichtet wird.

4. Verfahren nach einem der Ansprüche 1 bis 3,
**dadurch gekennzeichnet, dass**
das Gemisch (18) aus Körnern, Spreu und zweiter Strohfraktion aus dem Bunker (14) auf dem Feld entweder in einer Miete oder einem Folienschlauch (26) abgelegt wird.

5. Einrichtung zum Ernten von Druschfrüchten unter Verwendung eines Mähdreschers(1), umfassend
a) ein dem Schneidwerk (2) des Mähdreschers (1) nachgeordnetes Stroh, Dreschwerk (3) zum Trennen des Korn-Spreu-Gemisches (12) vom Stroh,
**dadurch gekennzeichnet, dass**
der Mähdrescher (1) umfasst:
b) eine dem Dreschwerk (3) nachgeordnete Häckseleinrichtung (4) mit Separierung der Gesamtstrohfraktion (5) in eine erste und eine zweite Strohfraktion (5.1, 5.2),
c) eine der Häckseleinrichtung (5) nachgeordnete Zerkleinerungseinrichtung (8) zur Zerkleinerung der zweiten Strohfraktion (5.2) und
d) ein Gebläse (10) mit einem Saugrohr (9) zum Ansaugen und Vermischen des Körner-Spreu-Gemisches (12) und der zweiten Strohfraktion (5.2) zu einem Gemisch (18) aus Körneren, Spreu und zweiter Strohfraktion und zum Fördern des Gemischens (18) in einen Bunker (14).

6. Einrichtung zum Ernten von Druschfrüchten unter Verwendung eines Mähdreschers (1) nach Anspruch 5,
**dadurch gekennzeichnet, dass**
die Zerkleinerungseinrichtung (8) als Hammermühle ausgebildete ist und eine gemeinsame Antriebswelle mit dem Gebläse (10) aufweist.

7. Einrichtung zum Ernten von Druschfrüchten unter Verwendung eines Mähdreschers (1) nach Anspruch 5 oder 6,
**dadurch gekennzeichnet, dass**
der auf einem Mähdrescher (1) angeordnete Bunker (14) eine steuerbare Schubwand (17) umfasst, durch die das Gemisch (18) aus Körnern, Spreu und zweiter Strohfraktion verdichtet werden kann.

8. Einrichtung zum Ernten von Druschfrüchten unter Verwendung eines Mähdreschers (1) nach einem der Ansprüche 5 bis 7,
**dadurch gekennzeichnet, dass**
innerhalb oder außerhalb des Bunkers (14) eine Folienschlauchpresse (19) vorgesehen ist.

## Claims

1. Method for harvesting threshed crops, with the following method steps:
a) reaping and picking up the threshed crops,
b) threshing out and separating the grain/chaff mixture (12) from the total straw fraction (5), and
c) feeding the grain/chaff mixture (12) into a hopper (14),
**characterized by** the following method steps:
d) chopping the total straw fraction (5) and separating the latter into a first and a second straw fraction (5.1, 5.2),
e) depositing the first straw fraction (5.1) on the field,
f) comminuting the second straw fraction (5.2),
g) mixing the second straw fraction (5.2) and the grain/chaff mixture (12) to form a mixture (18) of grains, chaff and second straw fraction, and entering the mixture (18) into a hopper (14), and
h) transferring the mixture (18) of grains, chaff and second straw fraction from the hopper (14) into a transport vehicle or depositing the mixture (18) of grains, chaff and second straw fraction on the field.

2. Method according to Claim 1,
**characterized in that**
the portion of the first straw fraction (5.1) remaining on the field is between 70% to 95%, preferably 75%, of the total straw fraction (5), and the portion of the second straw fraction (5.2) entered into the hopper (14) is between 5% to 30%, preferably 25%, of the total straw fraction (5).

3. Method according to Claim 1 or 2,
**characterized in that**
the mixture (18) of grains, chaff and second straw fraction is compacted in the hopper (14).

4. Method according to one of Claims 1 to 3,
**characterized in that**
the mixture (18) of grains, chaff and second straw fraction from the hopper (14) is deposited on the field either in a rick or in a film tube (26).

5. Device for harvesting threshed crops using a combine harvester (1), comprising
a) a threshing unit (3) which is arranged downstream of the cutting unit (2) of the combine harvester (1) for separating the grain/chaff mixture (12) from the straw,
**characterized in that**
the combine harvester (1) comprises:
b) a chopping device (4) arranged downstream of the threshing unit (3), with separation of the total straw fraction (5) into a first and a second straw fraction (5.1, 5.2),
c) a comminution device (8) arranged downstream of the chopping device (5), for comminuting the second straw fraction (5.2), and
d) a blower (10) with a suction tube (9) for sucking up and mixing the grain/chaff mixture (12) and the second straw fraction (5.2) to form a mixture (18) of grains, chaff and second straw fraction and for conveying the mixture (18) into a hopper (14).

6. Device for harvesting threshed crops using a combine harvester (1) according to Claim 5,
**characterized in that**
the comminution device (8) is designed as a hammer mill and has a common drive shaft with the blower (10).

7. Device for harvesting threshed crops using a combine harvester (1) according to Claim 5 or 6,
**characterized in that**
the hopper (14) arranged on a combine harvester (1) comprises a controllable sliding wall (17) by means of which the mixture (18) of grains, chaff and second straw fraction can be compacted.

8. Device for harvesting threshed crops using a combine harvester (1) according to one of Claims 5 to 7, **characterized in that** a film tube press (19) is provided within or outside the hopper (14).

## Revendications

1. Procédé dévolu à la récolte de fruits recueillis par battage, incluant les étapes opératoires suivantes :
a) moissonnage et prélèvement desdits fruits recueillis par battage,
b) extraction par battage, et séparation du mélange (12) de grains et de menues pailles d'avec la fraction totale de chaumes (5) et
c) acheminement dudit mélange (12) de grains et de menues pailles vers une cuve (14),
**caractérisé par** les étapes opératoires suivantes :
d) hachage de la fraction totale de chaumes (5), et dissociation en des première et seconde fractions de chaumes (5.1, 5.2),
e) épandage de la première fraction de chaumes (5.1) sur le champ,
f) broyage de la seconde fraction de chaumes (5.2),
g) brassage de ladite seconde fraction de chaumes (5.2) et du mélange (12) de grains et de menues pailles, afin d'obtenir un mélange (18) de grains, de menues pailles et de seconde fraction de chaumes, puis déversement dudit mélange (18) dans une cuve (14), et
h) transfert dudit mélange (18) de grains, de menues pailles et de seconde fraction de chaumes vers un véhicule de transport, à partir de ladite cuve (14), ou épandage, sur le champ, dudit mélange (18) de grains, de menues pailles et de seconde fraction de chaumes.

2. Procédé selon la revendication 1,
**caractérisé par le fait que**
la part de la première fraction de chaumes (5.1), subsistant sur le champ, représente de 70 % à 95 %, de préférence 75 %, et la part de la seconde fraction de chaumes (5.2), déversée dans la cuve (14), représente de 5 % à 30 %, de préférence 25 % de la fraction totale de chaumes (5).

3. Procédé selon la revendication 1 ou 2,
**caractérisé par le fait que**
le mélange (18) de grains, de menues pailles et de seconde fraction de chaumes est compacté dans la cuve (14).

4. Procédé selon l'une des revendications 1 à 3,
**caractérisé par le fait que**
le mélange (18) de grains, de menues pailles et de seconde fraction de chaumes, en provenance de la cuve (14), est épandu sur le champ soit dans une meule, soit dans un tuyau (26) en film souple.

5. Dispositif dévolu à la récolte de fruits recueillis par battage en utilisant une moissonneuse-batteuse (1), comprenant a) un mécanisme de battage (3) implanté en aval du mécanisme de coupe (2) de ladite moissonneuse-batteuse (1), et affecté à la séparation du mélange (12) de grains et de menues pailles d'avec les chaumes, **caractérisé par le fait que**
la moissonneuse-batteuse (1) comprend :
b) un dispositif de hachage (4), implanté en aval du mécanisme de battage (3) et procurant une dissociation de la fraction totale de chaumes (5) en des première et seconde fractions de chaumes (5.1, 5.2),
c) un dispositif de broyage (8), implanté en aval dudit dispositif de hachage (4) et affecté au broyage de la seconde fraction de chaumes (5.2), et
d) une soufflerie (10) dotée d'une tubulure d'aspiration (9) conçue pour aspirer et brasser ladite seconde fraction de chaumes (5.2) et le mélange (12) de grains et de menues pailles, en vue d'obtenir un mélange (18) de grains, de menues pailles et de seconde fraction de chaumes, et pour convoyer ledit mélange (18) vers une cuve (14).

6. Dispositif selon la revendication 5, dévolu à la récolte de fruits recueillis par battage en utilisant une moissonneuse-batteuse (1),
**caractérisé par le fait que**
le dispositif de broyage (8) est réalisé sous la forme d'un broyeur à marteaux, et présente un arbre d'entraînement en commun avec la soufflerie (10).

7. Dispositif selon la revendication 5 ou 6, dévolu à la récolte de fruits recueillis par battage en utilisant une moissonneuse-batteuse (1),
**caractérisé par le fait que**
la cuve (14), installée sur une moissonneuse-batteuse (1), comporte une paroi de poussée (17) pouvant être commandée, par l'intermédiaire de laquelle il est possible de compacter le mélange (18) de grains, de menues pailles et de seconde fraction de chaumes.

8. Dispositif selon l'une des revendications 5 à 7, dévolu à la récolte de fruits recueillis par battage en utilisant une moissonneuse-batteuse (1),
**caractérisé par le fait**
**qu'**une presse (19) à tuyaux en film souple est prévue à l'intérieur ou à l'extérieur de la cuve (14).
